# EUROPÄISCHE PATENTSCHRIFT

(11) **EP 1 240 226 B1**
(45) Veröffentlichungstag und Bekanntmachung des Hinweises auf die Patenterteilung: **17.08.2005**
(21) Anmeldenummer: 00987306.8
(22) Anmeldetag: 21.11.2000
(51) Int. Cl.: C08G 18/08, C08G 18/38, C08G 18/12, C09D 175/04

(54) **ISOCYANATO-OLIGOURETHANE**
ISOCYANATO-OLIGOURETHANES
ISOCYANATO-OLIGO-URETHANES

(30) Priorität: 02.12.1999 DE 19958167
(43) Veröffentlichungstag der Anmeldung: 18.09.2002
(73) Patentinhaber: Bayer MaterialScience AG, 51368 Leverkusen (DE)
(72) Erfinder: IRLE, Christoph, 41539 Dormagen (DE); KREMER, Wolfgang, 47647 Kerken (DE); LÜHMANN, Erhard, 51375 Leverkusen (DE); DANIELMEIER, Karsten, Bethel Park, PA 15102 (US)
(86) Internationale Anmeldenummer: PCT/EP2000/011836
(87) Internationale Veröffentlichungsnummer: WO 2001/040341

(56) Entgegenhaltungen:
- EP-A- 0 877 041
- WO-A-99/05192
- US-A- 5 807 919

## Beschreibung

Die vorliegende Erfindung betrifft ein Verfahren zur Verwendung von Oligourethanen, die ionische Gruppen und freie Isocyanatgruppen enthalten, in wässrigen Beschichtungen.

Wässrige Beschichtungen auf Basis von Polyurethan-Dispersionen, wie sie z. B. von D. Dieterich [Prog. Org. Coatings 9, 281 (1981)] beschrieben wurden, erreichen in vielen Anwendungen ein hohes technisches Niveau. Die Bildung eines Films erfolgt dabei durch physikalische Trocknung, d. h. durch das Verdunsten von Wasser und gegebenenfalls Coaleszensmitteln. Solche physikalisch trocknenden Beschichtungen sind in ihren Eigenschaften jedoch solchen Systemen unterlegen, bei denen auf dem beschichteten Substrat eine Vernetzung durch eine chemische Reaktion erfolgt.

Beschichtungen mit einem besonders hochwertigen Profil sind die aus z. B. der EP-A-358 979 bekannten wässrigen 2K-Polyurethan-Beschichtungen. Durch die Kombination einer Isocyanat-reaktiven Dispersion mit einem Isocyanat-Vernetzer werden Beschichtungen hoher mechanischer und chemischer Festigkeit erhalten. Üblich sind Kombinationen, die ca. 5 - 15 Vol.-% (bezogen auf das Gesamtvolumen des wässrigen 2K-Systems) Isocyanat-Vernetzer enthalten. Dieses ungleiche Volumenverhältnis der beiden Komponenten ist oft nachteilig. Um namlich eine möglichst effektive Durchmischung zweier in Wasser dispergierter Polymerer zu erreichen, sollten die beiden Komponenten ein annähernd gleiches Volumen aufweisen. Weiterhin bereitet die Kontrolle der Einsatzmengen Schwierigkeiten, weil die kleine (Vernetzer-) Menge in der Regel mit der gleichen Genauigkeit wie die um etwa den Faktor 10 größere zweite Reaktionskomponente dosiert wird.

Bei den bislang bekannten wässrigen 2K-Systemen ist weiterhin von Nachteil, daß 2 voneinander getrennte Reaktionspartner bereitgestellt werden müssen und nach deren Vermischen innerhalb einer kurzen Zeit, der Topfzeit des Systems, die Applikation erfolgen muß. Falls der formulierte Lack nicht innerhalb dieser Topfzeit auf das Substrat aufgebracht wurde, muß er entsorgt werden, was einen zusätzlichen hohen Aufwand bedeutet.

Der vorliegenden Erfindung lag dementsprechend die Aufgabe zugrunde, Beschichtungssysteme zu finden, die die beschriebenen Nachteile wässriger 2K-Beschichtungen vermeiden, gleichzeitig aber auf dem Substrat vernetzen und so ein hohes technisches Niveau aufweisen.

Diese Aufgabe wird durch den Einsatz der erfindungsgemäßen Oligourethane gelöst. Es wurde gefunden, daß vemetzende, wässrige Beschichtungen auf Basis von Isocyanat-funktionellen Oligourethanen und Wasser, das sowohl als Dispergiermedium als auch als "zweite Komponente" der Beschichtung dient, formuliert werden können.

Ein solches Beschichtungsmittel hat den Vorteil, daß Isocyanat-Funktionalität (wichtig für die Vernetzung) und Harz-Grundkörper als Hauptbestandteil des Lacksystems in einer Komponente vereint sind.

Eine bevorzugte Ausführungsform der vorliegenden Erfindung ist die Verwendung Isocyanat-funktioneller Oligourethane in einer vom Lackhersteller mit allen Hilfs- und Zusatzstoffen versehenen Lieferform. Dieser Lieferform muß dann vom Anwender lediglich noch Wasser zugesetzt werden.

Weiterhin wurde gefunden, daß die auf diese Weise formulierten wässrigen Beschichtungsmittel eine sehr gute Lagerstabilität aufweisen. Auch nach mehreren Wochen kann in solchen Dispersionen noch freies Isocyanat nachgewiesen werden. Während der Lagerung des im Wasser dispergierten Oligourethans reagieren freie Isocyanatgruppen langsam ab. Bei längerer Lagerung der wässrigen Formulierung wird eine Isocyanat-freie Polyurethan-Polyharnstoff-Dispersion erhalten. Diese kann weiterhin als physikalisch trocknende Beschichtung verwendet werden. Das Entsorgungsproblem, das herkömmlichen 2-Komponentensystemen bei Überschreitung der Topfzeit des formulierten Systems inhärent ist, ergibt sich hier also nicht.

Nach Applikation solcher Dispersionen wird die Vernetzung auf dem beschichteten Substrat durch Reaktion mit Luftfeuchtigkeit fortgesetzt. Die Reaktion kann durch Zugabe katalytisch wirksamer Verbindungen beschleunigt werden.

Eine besonders bevorzugte Verwendung der erfindungsgemäßen Oligourethane ist die Kombination mit weiteren, insbesondere von den herkömmlichen, wässrigen Zweikomponenten-Polyurethanbeschichtungen her bekannten Reaktionspartnern wie z. B. den aus der EP-A-0 358 979 bekannten Polyacrylat-Dispersionen. Im Vergleich zu den hier üblicherweise eingesetzten Vernetzern, wie sie z. B. aus der EP-A-0 540 985 bekannt sind, zeichnen sich die erfindungsgemäßen Oligourethane durch ein deutlich höheres NCO-Äquivalentgewicht aus. In der Praxis bedeutet dies, daß ein aus herkömmlichem Reaktionspartner und erfindungsgemäßem Oligourethan formulierter Lack einen deutlich höheren Volumenanteil an Vemetzer, zum Beispiel von 50 %, enthalten kann.

Allgemein handelt es sich bei der erfindungsgemäßen Verwendung um die Beschichtung mit Oligourethanen enthaltend 10 - 150, bevorzugt 20 - 80 meq / 100 g (berechnet als Anteil der anionischen Gruppe am nichtflüchtigen Anteil des Oligourethans) einer Schwefel oder Phosphor enthaltenden anionischen Gruppe, gekennzeichnet dadurch, daß die Oligourethane zum Zeitpunkt des Auftrags auf das zu beschichtende Substrat in einer wässrigen Formulierung dispergiert oder gelöst vorliegen und einen Gehalt an freien Isocyanatgruppen von 0,5 - 15, bevorzugt 1 - 10 und besonders bevorzugt 2 - 7 Gew.-% Gew.-% (bezogen auf nichtflüchtige Anteile des Oligourethans) aufweisen.

Der Isocyanatgruppen-Gehalt des Oligourethans vor dem Einbringen in die wässrige Formulierung beträgt 1 - 15, bevorzugt 2 - 10 und besonders bevorzugt 3 - 7 Gew.-% (bezogen auf nichtflüchtige Anteile des Oligourethans).

Bevorzugt werden die erfindungsgemäßen Oligourethane hergestellt aus
- A1.: 10 - 80 %, bevorzugt 30 - 60 % Isocyanaten und modifizierten Isocyanaten
- A2.: 0 - 50 %, bevorzugt 5 - 40 % polymeren Polyolen mit mittleren Molekulargewichten von 400 bis 6000 g/mol
- A3.: 0 - 20 %, bevorzugt 0 - 10 % Monoalkoholen
- A4.: 0 - 10 %, bevorzugt 0,5 - 5 % Polyolen, Aminopolyolen oder Polyaminen mit einem Molekulargewicht unter 400 g/mol
- A5.: 5 - 70 %, bevorzugt 10 - 30 % Mono-, Di- oder Polyolen bzw. Mono-, Di- oder Polyaminen mit einer Schwefel oder Phosphor enthaltenden anionischen Gruppe,
wobei gilt, daß die Angaben sich auf das Gewicht beziehen und zu 100 % addieren.

Geeignete Isocyanate (A1) sind zum Beispiel Verbindungen der Formel R₁(NCO)ₙ, wobei R₁ einen aromatischen Kohlenwasserstoffrest mit 6 bis 15 Kohlenstoffatomen oder bevorzugt einen araliphatischen Kohlenwasserstoffrest mit 7 bis 15 Kohlenstoffatomen, einen aliphatischen Kohlenwasserstoffrest mit 4 bis 12 Kohlenstoffatomen oder einen cycloaliphatischen Kohlenwasserstoffrest mit 6 bis 15 Kohlenstoffatomen bedeutet und wobei gilt, daß n = 1 oder 2 ist. Beispiele für solche Isocyanate sind Monoisocyanate wie *n*-Butylisocyanat, *n*-Hexylisocyanat, Cyclohexylisocyanat, Stearylisocyanat, Phenylisocyanat oder Naphthylisocyanat und Diisocyanate wie Tetramethylendiisocyanat, 1,4-Cyclohexyldiisocyanat oder α,α,α,'α,'-Tetramethyl-*m*- oder *p*-Xylylendiisocyanat. Bevorzugte Diisocyanate sind Hexamethylendiisocyanat, 1-Isocyanato-3,3,5-trimethyl-5-isocyanatomethylcyclohexan (Isophorondiisocyanat) und 4,4'-Diisocyanato-dicyclohexylmethan. Ebenso geeignet sind Mischungen der genannten Diisocyanate. Weiterhin geeignete Isocyanate sind beliebige, durch Modifizierung einfacher aromatischer, araliphatischer, aliphatischer und/oder cycloaliphatischer Diisocyanate hergestellte, aus mindestens zwei Diisocyanaten aufgebaute Polyisocyanate mit Urethan- und/oder Harnstoff und/oder Uretdion- und/oder Isocyanurat- und/oder Allophanat- und/ oder Biuret- und/oder Iminooxadiazindion- und/ oder Oxadiazintrionstruktur, wie sie beispielsweise in J. Prakt. Chem. 336 (1994) 185 - 200, DE-A-1 670 666, DE-A-1 954 093, DE-A-2 414 413, DE-A-2 452 532, DE-A-2 641 380, DE-A-3 700 209, DE-A-3 900 053 und DE-A-3 928 503 oder EP-A-0 336 205, EP-A-0 339 396 und EP-A-0 798 299 beispielhaft beschrieben sind. Die Gemische können dabei sowohl physikalische als auch chemische Gemische als auch physikalische und chemische Gemische aus Polyisocyanaten sein. Weiterhin geeignet sind monomere Isocyanate mit mehr als zwei Isocyanat-gruppen wie zum Beispiel 4-Isocyanatomethyl-1,8-octandiisocyanat oder 1,6,11-Undecantriisocyanat.

Die polymeren Polyole (A2) in dem Molekulargewichtsbereich von 400 - 6000 g/mol sind die üblichen wie sie für Oligo- und Polyurethane bereits seit langem eingesetzt werden, mit einer OH-Funktionalität von mindestens 1,8 bis ca. 4 wie zum Beispiel Polyester, Polyether, Polymerisate, insbesondere Polymethacrylate, Polycarbonate, Polyestercarbonate, Polyacetale, Polyolefine, Polyepoxide und Polysiloxane. Die polymeren Polyole (A2) können auch Urethangruppen sowie ethylenisch ungesättigte Einheiten enthalten. Bevorzugt verwendet werden Polyole in einem Molekulargewichtsbereich von 600 bis 2500 mit einer OH-Funktionalität von 2 bis 3. Besonders bevorzugt werden α,ω-Diole eingesetzt.

Ebenfalls möglich ist die Verwendung von Verbindungen der allgemeinen Formel I 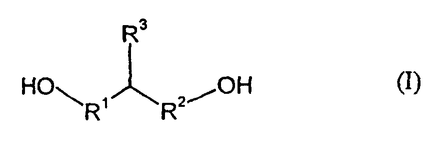 wobei
- R¹ und R²: unabhängig voneinander jeweils einen zweiwertigen aliphatischen, cycloaliphatischen oder aromatischen Rest mit 1 bis 18 C-Atomen, die durch Sauerstoff und/ oder Stickstoffatome unterbrochen sein können, bedeuten
und
- R³: für einen nicht-hydroxyterminierten Polyester oder bevorzugt Polyether steht. Besonders bevorzugt steht R³ für einen alkoxyterminierten Polyethylenoxidrest.

Monofunktionelle Alkohole (A3) sind z.B. Methanol, Ethanol, *n*-Propanol, *i*-Propanol, *n*-Butanol oder monofunktionelle Polyester oder Polyether, insbesondere Polyether aus Ethylenglykol und/ oder Propylenglykol mit Molekulargewichten von 76 - 5000 g/mol. Bevorzugt eingesetzt werden monofunktionelle Alkohole mit mehr als 6 C-Atomen wie 2-Ethylhexanol, 1-Decanol oder die unter den Handelsbezeichnungen Lorol® und Ocenol® (Henkel, DE) erhältlichen Fettalkohole.

Polyole, Aminopolyole oder Polyamine (A4) mit einem Molekulargewicht unter 400 g/mol sind in der entsprechenden Literatur ebenfalls in großer Zahl beschrieben. Als Beispiele seien genannt: Ethandiol, 1,2-Propandiol, 1,3-Propandiol, 1,4-Butandiol, 1,4-Cyclohexandimethanol, Trimethylolpropan, Glyzerin sowie Hydrazin, Ethylendiamin, 1,4-Diaminobutan, Isophorondiamin und 4,4'-Diaminodicyclohexylmethan. Bevorzugt eingesetzt werden 1,6-Hexandiol und Neopentylglykol.

Als Komponente (A5) sind alle Verbindungen geeignet, die neben einer Schwefel oder Phosphor enthaltenden anionischen Gruppe mindestens eine Isocyanat-reaktive Gruppe enthalten. Beispielhaft für Schwefel enthaltende Verbindungen seien das propoxylierte Addukt aus 2-Butendiol und Natrium-hydrogensulfit oder die in der WO 98/06768 beschriebenen, ein Salz der Sulfoisophthalsäure enthaltenden Polyester genannt. Ebenso geeignet ist z.B. das Natriumsalz der Hydroxyethansulfonsäure. Als aminofunktionelle Verbindungen seien z.B. die Salze des Taurin und seiner Derivate oder Verbindungen der allgemeinen Formel II genannt, 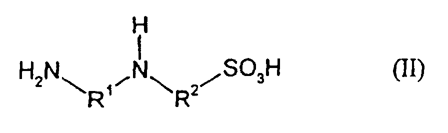 wobei
R¹ und R² jeweils unabhängig voneinander für einen zweiwertigen, aliphatischen oder cycloaliphatischen Rest mit 1 bis 12 C-Atomen, die durch Sauerstoff- und/oder Stickstoffatome unterbrochen sein können, stehen. Daneben können als Komponente (A5) auch solche Verbindungen eingesetzt werden, die eine in eine anionische Gruppe überführbare Einheit enthalten. Als solche kommen z. B. Sulfonsäuren (durch Neutralisation ins Sulfonat überführbar) oder C=C-Doppelbindungen enthaltende Verbindungen (durch Addition von Hydrogensulfit ins Sulfonat überführbar) in Frage.

Geeignete Phosphor enthaltende enthaltende Verbindungen (A5) sind z. B. die in der DE-A-1 9724 199 genannten sauren Ester der Phosphorsäure. Bevorzugt eingesetzt werden die in der EP-A-0 922 736 beschriebenen Phosphonatgruppen enthaltenden Polyester.

Die erfindungsgemäßen Oligourethane werden nach üblichem Verfahren durch Isocyanat-Additionsreaktionen hergestellt. Verschiedene Möglichkeiten zur Herstellung von Oligourethanen werden z. B. von D. Dieterich beschrieben. Wegen der Giftigkeit leichtflüchtiger, Isocyanatgruppen enthaltender Verbindungen werden die erfindungsgemäßen Oligourethane bevorzugt so hergestellt, daß das Endprodukt praktisch frei von monomeren Isocyanaten ist. "Praktisch frei von monomeren Isocyanaten" bedeutet nach derzeitiger Gesetzeslage, daß der Gehalt z. B. an freiem Isophorondiisocyanat oder Methylenbis-(cyclohexylisocyanat) geringer als 0,5 Gew.-% (bezogen auf die Lieferform) sein muß.

Enthält die Komponente (A5) eine in die anionische Form überführbare Verbindung, so kann die Umsetzung dieser Vorstufe in eine anionische Gruppe vor, während oder nach dem Einbau der Komponente (A5) in das Oligourethan erfolgen.

Die auf diese Weise hergestellten Oligourethane können in Abwesenheit von Wasser entsprechend den üblichen Marktanforderungen beliebig lange gelagert werden. Vor Applikation als Beschichtungsmittel oder Klebstoff werden sie in Wasser oder in wässrigen Formulierungen dispergiert.

Zur Dispergierung in Wasser werden die Oligourethane mit einem geeigneten Mischelement in Wasser eingerührt oder es wird unter Rühren Wasser zum Oligourethan gegeben. Bei ausreichendem Anteil an hydrophilen Gruppen ist es möglich, die Oligourethane durch Einrühren per Hand, z. B. unter Zuhilfenahme eines Glasstabs oder durch Schütteln, in Wasser zu homogenisieren. Überraschenderweise liegen in den derart hergestellten Dispersionen, trotz der Reaktivität der Isocyanatgruppen mit Wasser, auch nach längerer Zeit (z.B. 7 Tage), noch freie Isocyanatgruppen vor.

Vor, während oder nach der Dispergierung können den erfindungsgemäßen Oligourethanen weitere, Isocyanat-funktionelle Verbindungen zugefügt werden. Diese Isocyanat-funktionellen Verbindungen können ebenfalls über hydrophile Gruppen verfügen. Beispielsweise können hydrophile Polyisocyanate eingesetzt werden, wie sie z. B. aus der EP-A-0 540 985 bekannt sind. Bevorzugt werden nicht-hydrophilierte Polyisocyanate zugefügt, wie sie bereits unter (A1) beschrieben wurden. Eine bevorzugte Anwendungsform der erfindungsgemäßen Oligourethane ist es, diesen Dispersionen weitere wasserdispergierbare oder wasserlösliche Substanzen zuzugeben. Hierzu kommen alle als Bindemittel für Beschichtungen oder Klebstoffe geeigneten Stoffe in Frage. Als Beispiel seien genannt wasserdispergierbare oder wasserdispergierte Polyester, Polyacrylate, Polyurethane, Polyepoxide, Polybutadiene, Alkydharze sowie Kombinationsharze aus den genannten. Die genannten Stoffe können funktionelle Gruppen wie Amino- und/ oder Hydroxylgruppen sowie ethylenisch ungesättigte Einheiten tragen. Eine besonders bevorzugte Verwendung der erfindungsgemäßen Oligourethanen ist deren Dispergierung in einer wässrigen Polyester-, Polyacrylat-, Polyurethan-, Polyurethan-Polyacrylat-, Polyepoxid-, Polybutadien- oder Alkydharzdispersion.

Die so hergestellten Dispersionen können, zusammen mit den üblichen Hilfs- und Zusatzstoffen, in Beschichtungsmittel für metallische oder mineralische Untergründe, Holz, Leder oder Textilien sowie in Klebstoffen eingesetzt werden.

Die folgenden Beispiele erläutern die Erfindung:

### Beispiele

### Beispiel 1

In einem Rundkolben mit Rührer, Innenthermometer, Rückflußkühler und Gaseinleitung werden 16 g des propoxylierten Addukts aus Butendiol und NaHSO₄ (Molekulargewicht 424 g/mol), 234 g Desmodur® E 4280 (Bayer AG, aliphatisches Isocyanat-Prepolymer auf Basis Isophorondiisocyanat, 80 %-ig gelöst in Methoxypropylacetat, Isocyanat-Gehalt 2,8 %, Gehalt an monomerem Isocyanat < 0,5 %) und 120 g Methylethylketon gegeben. Bei einer Innentemperatur von 92°C (Rückfluß) wird 6 h gehalten, bis der NCO-Gehalt 1,0 Gew.-% beträgt. Das Produkt ist eine Flüssigkeit mit einer Viskosität von 380 mPa s.

### Beispiel 2

In einem Rundkolben mit Rührer, Innenthermometer, Rückflußkühler und Gaseinleitung werden 40 g des propoxylierten Addukts aus Butendiol und NaHSO₄ (Molekulargewicht 424 g/mol), 234 g Desmodur® N 3200 (Bayer AG, Aliphatisches Polyisocyanat auf Basis Hexamethylendiisocyanat, Isocyanat-Gehalt 23,0 %, Gehalt an monomerem Isocyanat < 0,5 %) gegeben. Bei einer Innentemperatur von 80°C wird 4 h gehalten, bis der NCO-Gehalt 16,1 Gew.-% beträgt. Gehalt an SO₃⁻ -Gruppen (bez. auf nichtflüchtige Anteile, berechnet): 3,1 Gew.-%.

### Beispiel 3

In einem Rundkolben mit Rührer, Innenthermometer, Rückflußkühler und Gaseinleitung werden 127 g des propoxylierten Addukts aus Butendiol und NaHSO₄ (Molekulargewicht 424 g/mol), 175 g des Umsetzungsproduktes aus 2 mol eines Polyesterdiols aus Adipinsäure und Butandiol (Molekulargewicht 900 g/mol) und 1 mol Hexamethylendiisocyanat, 5 g Neopentylglykol sowie 33 g Isophorondiisocyanat gegeben. Bei einer Temperatur von 100°C wird gerührt, bis ein NCO-Gehalt von 0,2 % erreicht ist. Nun werden 498 g Desmodur® Z4470 (Bayer AG, aliphatisches Polyisocyanat auf Basis Isophorondiisocyanat, 70 %-ig gelöst in Solvent Naphtha 100, Isocyanat-Gehalt 11,9 %, Gehalt an monomerem Isocyanat < 0,5 %) zugegeben und der Ansatz bei 80°C gerührt bis ein NCO-Gehalt von 5,2 % erreicht ist. Nach Zugabe von 300 g Methylethylketon wird bei 80°C weiter umgesetzt, bis ein NCO-Gehalt von 3,0 % erreicht ist. Das Endprodukt wird mit weiteren 260 g Methylethylketon versetzt und weist eine Viskosität von 5.000 mPa s auf.

### Beispiel 4

In einem Rundkolben mit Rührer, Innenthermometer, Rückflußkühler und Gaseinleitung werden 127 g des propoxylierten Addukts aus Butendiol und NaHSO₄ (Molekulargewicht 424 g/mol), 175 g des Umsetzungsproduktes aus 2 mol eines Polyesterdiols aus Adipinsäure und Butandiol (Molekulargewicht 900 g/mol) und 1 mol Hexamethylendiisocyanat sowie 22 g Isophorondiisocyanat gegeben. Bei einer Temperatur von 80°C wird 2 h gerührt, anschließend auf 100°C aufgeheizt. Nach weiteren 2,5 h ist ein NCO-Gehalt von 0,2 % erreicht. Nun werden 498 g Desmodur® Z4470 (Bayer AG, Aliphatisches Polyisocyanat auf Basis Isophorondiisocyanat, 70 %-ig gelöst in Solvent Naphtha 100, Isocyanat-Gehalt 11,9 %, Gehalt an monomerem Isocyanat < 0,5 %) zugegeben und der Ansatz 2 h bei 80°C gerührt, bis ein NCO-Gehalt von 5,4 % erreicht ist. Nach Zugabe von 300 g Methylethylketon wird bei 85°C weiter umgesetzt, bis ein NCO-Gehalt von 3,0 % erreicht ist. Das Endprodukt wird mit weiteren 100 g Methylethylketon versetzt und weist eine Viskosität von 11.200 mPa s auf.

### Beispiel 5

In einem Rundkolben mit Rührer, Innenthermometer, Rückflußkühler und Gaseinleitung werden 64 g des propoxylierten Addukts aus Butendiol und NaHSO₄ (Molekulargewicht 424 g/mol), 160 g eines Polyesterdiols aus Adipinsäure und Butandiol (Molekulargewicht 900 g/mol) sowie 183 g Tegomer® D 3403 (Goldschmidt AG, Addukt aus 1 mol Trimethylolpropan und 1 mol eines methoxyterminierten Ethylenoxid-Polyethers) gegeben. Bei einer Temperatur von 50°C werden 32 g Hexamethylendiisocyanat, 498,4 g Desmodur® Z 4470 (Bayer AG, Aliphatisches Polyisocyanat auf Basis Isophorondiisocyanat, 70 %-ig gelöst in Methoxypropylacetat/Xylol, Isocyanat-Gehalt 11,9%, Gehalt an monomerem Isocyanat < 0,5 %) und 500 g Dipropylenglykol-dimethylether gegeben und unter Rühren auf 80°C aufgeheizt. Nach 2 h wird auf 100°C aufgeheizt. Nach 24 h bei 100°C beträgt der Isocyanatgehalt 2,7 %. Das Endprodukt weist eine Viskosität von 1.300 mPa s auf.

### Beispiel 6

In einem Rundkolben mit Rührer, Innenthermometer, Rückflußkühler und Gaseinleitung werden 131 g des propoxylierten Addukts aus Butendiol und NaHSO₄ (Molekulargewicht 424 g/mol), 99 g eines Oligourethans aus 2 mol Tegomer® BD 1000 (Goldschmidt AG) und 1 mol Hexamethylendiisocyanat vorgelegt und auf 100°C aufgeheizt. Während 2 h bei 15 mbar wird entwässert, dann auf 50°C abgekühlt. Nach Zugabe von 22 g Isophorondiisocyanat und 50 g Cyclohexylmonoisocyanat wird auf 100°C aufgeheizt. Der Ansatz wird bei dieser Temperatur gehalten, bis ein Isocyanatgehalt von 0,4 % erreicht ist. Dann werden 498 g Desmodur® Z 4470 (Bayer AG, Aliphatisches Polyisocyanat auf Basis Isophorondiisocyanat, 70 %-ig gelöst in Methoxypropylacetat/ Xylol, Isocyanat-Gehalt 11,9 %, Gehalt an monomerem Isocyanat < 0,5 %) zugegeben und bei 100°C gehalten, bis der NCO-Gehalt 4,5 % beträgt. Das Endprodukt weist eine Viskosität von 4.500 mPa s auf.

### Beispiel 7

In einem Rundkolben mit Rührer, Innenthermometer, Rückflußkühler und Gaseinleitung werden 162 g des propoxylierten Addukts aus Butendiol und NaHSO₄ (Molekulargewicht 424 g/mol), 315 g eines Polyesterdiols aus Adipinsäure, Hexandiol und Neopentylglykol (Molekulargewicht 1000 g/mol) sowie 12 g Neopentylglykol und 159 g N-Methylpyrrolidon auf 70°C aufgeheizt. Nun werden 400 g 4,4'-Diisocyanato-dicyclohexylmethan zugegeben und die Mischung auf 100°C aufgeheizt bis ein Gehalt an Isocyanat-Gruppen von 5,6 % erreicht ist. Anschließend wird abgekühlt und mit einem 1:1-Gemisch aus N-Methylpyrrolidon und Methoxypropylacetat verdünnt, bis eine Viskosität von 4.500 mPa s erreicht ist.

### Beispiel 8 Anwendung als Lack

Aus dem Oligourethan gemäß Beispiel 6 werden Klarlacke gemäß folgenden Rezepturen A und B formuliert. Man erkennt, daß besonders unter dem Einfluß eines die Isocyanatvemetzung beschleunigenden Katalysators eine Härtung stattfindet.

| | A | B |
|---|---|---|
| Oligourethan gemäß Beispiel 6 | 50,0 | 50,0 |
| Serad® FX 1010, 5%ig in Wasser (Servo Chemie) | 6,0 | 6,0 |
| Wasser | 44,0 | 44,0 |
| BYK 348 (Byk Chemie) | 1,0 | 1,0 |
| Dibutylzinndilaurat 10%ig | 0,3 | 0 |
| Angaben in Gew.-% | | |

### Prüfung :

- Auftrag:: 1* 150 µm Naßfilm auf MDF (beschichtet mit einer Melaminfolie, weiß) nach 30 min Standzeit der Formulierung
- Trocknung:: 7 Tage bei 18 - 23°C

| Prüfung und Auswertung der Chemikalienfestigkeit gemäß DIN 68861 | | | |
|---|---|---|---|
| Prüfmittel | Belastungszeit | A | B |
| Ethyl-Butylacetat (1:1) | 10 sec | 1 | 5 |
| Aceton | 10 sec | 3 | 5 |
| Ammoniaklösung | 2 min | 1 | 4 |
| Ethanol | 1 h | 3 5 | |
| Wasser | 16 h | 3 | 5 |
| Note 0 = keine sichtbare Veränderung / Note 5 = Film völlig zerstört | | | |

### Beispiel 9 Formulierung in Abmischung mit einer Polyacrylat-Dispersion

Aus der Polyacrylat-Dispersion Bayhydrol® VP LS 2250 (Bayer AG) wurde ein Lack nach folgender Rezeptur formuliert:

| | |
|---|---|
| Bayhydrol® VP LS 2250 | 106,1 |
| Butylglykol/ Wasser 1:1 | 12,0 |
| Dehydran® 1293 (Henkel) | 1,5 |
| Byk® 348 (Byk Chemie) | 0,3 |
| Serad FX 1010, 5%ig in Wasser (Servo Chemie) | 9,0 |
| Wasser | 21,1 |
| Angaben in Gew.-Teilen | |

Aus den erfindungsgemäßen Oligourethanen sowie Desmodur® N3300 (Bayer AG) werden folgende Mischungen bereitet:

| Mischung A) | |
|---|---|
| Oligourethan gemäß Beispiel 4) | 25 |
| Wasser | 75 |

| Mischung B) | |
|---|---|
| Oligourethan gemäß Beispiel 3) | 25 |
| Wasser | 75 |

| Mischung C) | |
|---|---|
| Oligourethan gemäß Beispiel 3) | 12,5 |
| Desmodur® N3300 | 12,5 |
| Wasser | 75 |
| Angaben in Gew.-% | |

Der Lack auf Basis Bayhydrol® VP LS 2250 und die Mischungen A), B) und C) werden gemäß folgender Tabelle abgemischt und nach einer Standzeit von 30 min oder 1 Tag appliziert:

| | | Mischung | | | |
|---|---|---|---|---|---|
| | Lack | A | B | C | Standzeit |
| Beispiel 9.1) (Vergleich) | 1 | - | - | - | 30 min |
| Beispiel 9.2) | 2 | 1 | - | - | 30 min |
| Beispiel 9.3) | 2 | - | 1 | - | 30 min |
| Beispiel 9.4) | 4 | - | - | 1 | 30 min |
| Beispiel 9.5) | 4 | - | 1 | - | 1 Tag |
| Angaben in Gew.-Teilen | | | | | |

### Prüfung :

- Auftrag:: 1* 150 µm Naßfilm auf MDF (beschichtet mit einer Melaminfolie, weiß) nach 30 min Standzeit der Formulierung.
- Trocknung:: 7 Tage bei 18 - 23 °C

| Prüfung und Auswertung der Chemikalienfestigkeit gemäß DIN 68861 | | | | | | |
|---|---|---|---|---|---|---|
| | | Beispiel | | | | |
| Prüfmittel | Belastungszeit | 9.1) | 9.2) | 9.3) | 9.4) | 9.5) |
| Ethyl-/Butylacetat (1:1) | 10 sec | 5 | 4 | 4 | 3 | 0 |
| Aceton | 10 sec | 5 | 4 | 4 | 3 | 0 |
| Ammoniaklösung | 2 min | 0 | 0 | 0 | 0 | 0 |
| Ethanol | 1 h | 5 | 3 | 1 | 1 | 0 |
| Wasser | 16 h | 0 | 0 | 0 | 0 | 0 |
| Note 0 = keine sichtbare Veränderung / Note 5 = Film völlig zerstört | | | | | | |

## Patentansprüche

1. Verfahren zur Herstellung von Beschichtungen, **dadurch gekennzeichnet, dass** als Bindemittel eine wässrige Dispersion eines Oligourethans, enthaltend 10 - 150 meq / 100 g einer Schwefel oder Phosphor enthaltenden anionischen Gruppe, eingesetzt wird, welches zum Zeitpunkt des Auftrags auf das zu beschichtende Substrat in einer wässrigen Formulierung dispergiert oder gelöst vorliegt und einen Gehalt an freien Isocyanatgruppen von 0,5 - 15 Gew.-% (bezogen auf nichtflüchtige Anteile des Oligourethans) aufweist und die Schichtdicke der Beschichtung höchstens 150 µm beträgt.

2. Verfahren gemäß Anspruch 1, **dadurch gekennzeichnet, dass** die Isocyanat-funktionellen Oligourethane aus
10 - 80 % Isocyanaten und modifizierten Isocyanaten
0 - 50 % polymeren Polyolen mit mittleren Molekulargewichten von 400 bis 6000 g/mol
0 - 20 % Monoalkoholen
0 - 10 % Polyolen, Aminopolyolen oder Polyaminen mit einem Molekulargewicht unter 400 g/mol
5 - 70 % Mono-, Di- oder Polyolen bzw. Mono-, Di- oder Polyaminen mit einer Schwefel oder Phosphor enthaltenden anionischen Gruppe,
hergestellt werden, wobei sich die %-Angaben auf das Gewicht beziehen und zu 100 % addieren.

3. Verfahren gemäss Ansprüchen 1 und 2, **dadurch gekennzeichnet, dass** die Isocyanat-funktionellen Oligourethane aus
30 - 60 % Isocyanaten und modifizierten Isocyanaten
5 - 40 % polymeren Polyolen mit mittleren Molekulargewichten von 400 bis 6000 g/mol
0 - 10 % Monoalkoholen
0,5 - 5 % Polyolen, Aminopolyolen oder Polyaminen mit einem Molekulargewicht unter 400 g/mol
10 - 30 % Mono-, Di- oder Polyolen bzw. Mono-, Di- oder Polyaminen mit einer Schwefel oder Phosphor enthaltenden anionischen Gruppe,
hergestellt werden, wobei sich die %-Angaben auf das Gewicht beziehen und zu 100 % addieren.

4. Verfahren gemäß Anspruch 3, **dadurch gekennzeichnet, dass** der Gehalt an Isocyanatgruppen in den Isocyanat-funktionellen Oligourethanen vor dem Einbringen in die wässrige Formulierung 1 - 15 Gew.-% (bezogen auf nichtflüchtige Anteile des Oligourethans) beträgt.

5. Verfahren gemäss Anspruch 1, **dadurch gekennzeichnet, dass** das Dispergieren des Oligourethans in Wasser in Gegenwart einer in Wasser dispergierten weiteren Bindemittelkomponente erfolgt.

6. Verfahren gemäss Anspruch 1, **dadurch gekennzeichnet, dass** beim Dispergieren des Oligourethans die weitere Bindemittelkomponente über Isocyanat-reaktive funktionelle Gruppen verfügt.

## Claims

1. Process for producing coatings, **characterized in that** use is made as binder of an aqueous dispersion of an oligourethane containing 10 - 150 meq/100 g of a sulphur- or phosphorus-containing anionic group and being present, at the time of application to the substrate to be coated, in solution or dispersion in an aqueous formulation, and having a free isocyanate group content of 0.5% - 15% by weight (based on non-volatile fractions of the oligourethane), the layer thickness of the coating being not more than 150 µm.

2. Process according to Claim 1, **characterized in that** the isocyanate-functional oligourethanes are prepared from
10% - 80% isocyanates and modified isocyanates
0 - 50% polymeric polyols having average molecular weights of 400 to 6000 g/mol
0 - 20% monoalcohols
0 - 10% polyols, aminopolyols or polyamines having a molecular weight below 400 g/mol
5% - 70% mono-, di- or polyols and/or mono-, di- or polyamines having a sulphur- or phosphorus-containing anionic group,
the percentages being by weight and adding up to 100%.

3. Process according to Claims 1 and 2, **characterized in that** the isocyanate-functional oligourethanes are prepared from
30% - 60% isocyanates and modified isocyanates
5% - 40% polymeric polyols having average molecular weights of 400 to 6000 g/mol
0 - 10% monoalcohols
0.5% - 5% polyols, aminopolyols or polyamines having a molecular weight below 400 g/mol
10% - 30% mono-, di- or polyols and/or mono-, di- or polyamines having a sulphur- or phosphorus-containing anionic group,
the percentages being by weight and adding up to 100%.

4. Process according to Claim 3, **characterized in that** the isocyanate content of the isocyanate-functional oligourethanes prior to introduction into the aqueous formulation is 1% - 15% by weight (based on non-volatile fractions of the oligourethane).

5. Process according to Claim 1, **characterized in that** the oligourethane is dispersed in water in the presence of a further binder component dispersed in water.

6. Process according to Claim 1, **characterized in that** during the dispersing of the oligourethane the further binder component possesses isocyanate-reactive functional groups.

## Revendications

1. Procédé pour appliquer des revêtements, **caractérisé en ce que** l'on utilise en tant que liant une dispersion aqueuse d'un oligouréthane contenant de 10 à 150 milliéquivalents/100 g d'un groupe anionique soufré ou phosphoré, lequel, au moment de l'application sur le substrat à revêtir, est à l'état dispersé ou dissous dans une composition aqueuse et a une teneur en groupes isocyanate libres de 0,5 à 15 % en poids (sur la partie non volatile de l'oligouréthane) et **en ce que** l'épaisseur de couche du revêtement est au maximum de 150 µm.

2. Procédé selon la revendication 1, **caractérisé en ce que** les oligouréthanes à fonctions isocyanate sont préparés à partir de
10 à 80 % d'isocyanates et d'isocyanates modifiés
0 à 50 % de polyols polymères à un poids moléculaire moyen de 400 à 6000 g/mol
0 à 20 % de monoalcools
0 à 10 % de polyols, aminopolyols ou polyamines à un poids moléculaire inférieur à 400 g/mol
5 à 70 % de mono-, di- ou poly-ols ou mono-, di- ou polyamines contenant un groupe anionique soufré ou phopshoré,
les indications de pourcentage s'entendant en poids et se complétant au total de 100 %.

3. Procédé selon les revendications 1 et 2, **caractérisé en ce que** les oligouréthanes à fonctionsisocyanate sont préparés à partir de
30 à 60 % d'isocyanates et d'isocyanates modifiés,
5 à 40 % de polyols polymères à un poids moléculaire moyen de 400 à 6000 g/mol,
0 à 10 % de monoalcools,
0,5 à 5 % de polyols, aminopolyols ou polyamines à un poids moléculaire inférieur à 400 g/mol,
10 à 30 % de mono-, di- ou poly-ols ou de mono-, di- ou polyamines contenant un groupe anionique soufré ou phosphoré,
les pourcentages indiqués s'entendant en poids et se complétant à un total de 100 %.

4. Procédé selon la revendication 3, **caractérisé en ce que** la teneur en groupes isocyanate des oligouréthanes à fonctions isocyanate avant introduction dans la composition aqueuse est de 1 à 15 % en poids (par rapport à la partie non volatile des oligouréthanes).

5. Procédé selon la revendication 1, **caractérisé en ce que** l'oligouréthane est dispersé dans l'eau en présence d'un autre composant de liant dispersé dans l'eau.

6. Procédé selon la revendication 1, **caractérisé en ce que**, à la dispersion de l'oligouréthane, l'autre composant de liant porte des groupes fonctionnels réactifs avec les isocyanates.
